# NEW EUROPEAN PATENT SPECIFICATION

(11) **EP 0 327 505 B2**
(45) Date of publication and mention of the opposition decision: **14.11.2001**
(45) Mention of the grant of the patent: 30.07.1997
(21) Application number: 89810078.9
(22) Date of filing: 30.01.1989
(51) Int. Cl.: C08L 3/02, C08L 101/00, A61K 47/00, A01N 25/00

(54) **Polymeric materials made from destructurized starch and at least one synthetic thermoplastic polymeric material**
Polymere Werkstoffe, bestehend aus destrukturierter Stärke und mindestens einem thermoplastischen synthetischen Polymerwerkstoff
Matériau polymériques fabriqués à partir d'amidon déstructuré et d'au moins un matériau polymérique synthétique thermoplastique

(30) Priority: 03.02.1988 GB 8802313
(43) Date of publication of application: 09.08.1989
(73) Proprietor: NOVAMONT S.p.A., 28100 Novara (IT)
(72) Inventor: Lay, Gustav, D-7841 Bad Bellingen (DE); Rehm, Johannes, D-7812 Bad Krozingen (DE); Stepto, Robert Frederick Thomas, Poynton Chesire SK12 1JJ (GB); Thoma, Markus, CH-4125 Riehen (CH)
(74) Representative: HOFFMANN - EITLE

(56) References cited:
- EP-A- 0 118 240
- EP-A- 0 304 401
- BE-A- 654 605
- DE-A- 3 712 029
- FR-A- 2 184 657
- GB-A- 2 190 093
- US-A- 3 137 592
- US-A- 4 016 117
- US-A- 4 026 849
- US-A- 4 133 784
- US-A- 4 337 181
- US-A- 4 420 576
- US-A- 4 454 268
- US-A- 4 673 438
- US-A- 4 738 724
- INDUSTRIAL & ENGINEERING CHEMISTRY RESEARCH, vol. 26, no. 8, August 1987, pages 1659-1663, American Chemical Society; F.H. OTEY et al.: "Starch-based blown films"
- Potato Starch ; a product information bulletin from Avebe dated January, 1989
- Biodegradable Films from Starch and Ethylene-Acrylic Acid Copolymer by Otey et al., Ind. Eng. Chem. Prod. Res. Dev., vol 16(4), p305f(1997)
- Starch-base Blown films for Agricultural Mulch by swanson et al. published in 1980
- Starch-based Blown films by otey et al., Ing. Chem. Prod. REs. Dev., vol 19, p593f (1980)
- Starch-based Films. Preliminary Diffusion Evaluation, by Otey et al., Ind. Eng. Chem. Prod. Res. Dev., vol 23, p284-287 (1984)
- Starch-Filled Polyvinyl Chloride Plastics - Preparation and Evaluation, by Westhoff et al., Ind. Eng. Chem. Prod. Res. Dev., vol 13(2), p123f(1974)
- Development of Starch Based Plastics - A reexamination of Selected Polymer Systems in Historical Perspective by Shogren et al., dated 1993
- Starch : Chemistry and Technology, 2nd ed., 1984, pp 183-247 (Whistler et al.)
- Ind. Eng. Chem. Prod. Res. Dev., vol 19 (1980), p 592-595 ; Starch-based blown films
- Polymer Blends by D.R. Paul et al., Academic Press New York, San Fransisco, London, p.37-42
- Concise Encyclopedia of Polymer Science and Engineering, Wiley 1980, p17, Table1
- J Ferment. Technol., Vol. 54 (1976) pp. 603.608, Tokiwa et al.
- Agric. Biol. Chem., Vol. 42 (1978), pp. 1071-1072, Tokiwa et al.

## Description

The present invention refers to polymeric materials made from destructurized starch and one or more synthetic thermoplastic polymeric materials.

It is known that natural starch which is found in vegetable products and which contains a defined amount of water, can be treated at an elevated temperature and in a closed vessel, thereby at elevated pressure, to form a melt. The process is conveniently carried out in an injection molding machine or extruder. The starch is fed through the hopper onto a rotating, reciprocating screw The feed material moves along the screw towards the tip. During this process, its temperature is increased by means of extemal heaters around the outside of the barrel and by the shearing action of the screw. Starting in the feed zone and continuing in the compression zone, the particulate feed becomes gradually molten. It is then conveyed through the metering zone, where homogenization of the melt occurs, to the end of the screw. The molten material at the tip can then be treated further by injection molding or extrusion or any other known technique to treat thermoplastic melts, to obtain shaped articles.

This treatment, which is described in the European Patent Application No. 84 300 940.8 (Publication No. 118 240) yields an essentially destructurized starch. The reason for this being that the starch is heated above the glass transition and the melting temperatures of its components so that they undergo endothermic transitions. As a consequence a melting and disordering of the molecular structure of the starch granules takes place, so that an essentially destructurized starch is obtained. The expression "destructurized starch" defines starch obtained by such thermoplastic melt formation.

US-A-4 133 754 discloses film compositions made from a gelatinized starchy material and a water-dispersible ethylene acrylic acid copolymer. Gelatinization is different from destructurization. Gelatinized starch still has granular structure although the granules are disrupted whilst destructurized starch has no granular structure. Compositions when produced according to the present invention are destructurized.

The obtained destructurized starch is a new and useful material for many applications. An important property is its biodegradability. In humid air, however, destructurized starch takes up water from the air thereby increasing its own moisture content. In consequence a shaped article made from such destructurized starch loses its form stability very quickly, which is an important disadvantage for many applications. It was found that a shaped article, such as a narrow long rod, under the influence of humid air may shrink within a few hours and lose up to 40 % in its length.

Thermoplastic materials must normally be processed in the absence of water or volatile materials. Starch does not melt in the absence of water but decomposes at elevated temperature, i.e. around 240°C. It was therefore assumed that starch could not be used as a thermoplastic component together with hydrophobic water-insoluble polymeric materials such as water insoluble polymeric amino acids, not only due to the mentioned factors and because starch forms a melt only in the presence of water as described above, but generally due to its chemical structure and its hydrophilic nature.

It has now been found that starch, containing a defined amount of water, when heated in a closed vessel as described above to form a melt of destructurized starch, exhibits the same flow characteristics as melts made from thermoplastic synthetic materials with comparable viscosity values and that melts made from water-containing destructurized starches are compatible in their processing with melts formed by essentially water insoluble anhydrous thermoplastic synthetic polymers. In this sense the two types or molten materials show an interesting combination of their properties, especially after the melt has solidified.

One very important aspect is the surprisingly improved dimensional stability of such destructurized starch blended with such a thermoplastic synthetic material. For example, by blending destructurized starch with only 1 % by weight of a thermoplastic synthetic polymer as described later on, a shrinkage of less than 4 % is observed after two days, for the narrow long rod just mentioned above.

The present invention refers to a composition comprising: a) destructurized starch having no granular structure produced by heating a starch having a water content of 5 to 30% by weight based on the starch/water component, in a closed volume under shear; and at a temperature above the glass transition and the melting points of its components and at a pressure corresponding at a minimum to the vapor pressure of water at the used temperature to form a melt and heating the melt for a time long enough to obtain a melting of the molecular structure of the starch granules and a homogenization of the melt; b) a water-insoluble thermoplastic polymer which undergoes melt formation at a set processing temperature within the range of 95°C to 210°C and is selected from the group consisting of polyolefines, poly(vinyl chloride), poly(vinyl acetate), polystyrenes, polyacrylonitriles, polyvinylcarbazols, poly(acrylic acid) esters, poly-(methacrylic acid) esters, polyacetals, thermoplastic polycondensates, polyarylethers, thermoplastic polyimides, poly(hydroxy butyrate) and copolymers thereof.

The present invention refers to said blended polymeric materials in the molten or in the solid form.

The present invention further refers to shaped articles made from said blended polymeric material.

The present invention also refers to a blended composition in the form of a thermoplastic melt, comprising water-containing destructurized starch having no granular structure and a water-insoluble thermoplastic polymer or a mixture of such polymers, formed by the process comprising: 1) providing a starch composed mainly of amylose and/or amylopectin and having a water content of from 5% to 30% by weight; 2) heating said starch in a closed volume under shear and at a temperature above the glass transition and the melting points of the starch components and at a pressure corresponding at a minimum to the vapor pressure of water at the used temperature to form a melt whereby the pressure corresponds at a minimum to the vapour pressure of water at the temperature used and heating the melt for a time long enough to obtain a melting of the molecular structure of the starch granules and a homogenization of the melt; and 3) admixing to said starch/water component at least one polymer as defined in claim 1 as component b), before, during or after destructurization.

The term "starch" as used herein includes chemically essentially non-modified starches as for example generally carbohydrates of natural, vegetable origin, composed mainly of amylose and/or amylopectin. They may be extracted from various plants, examples being potatoes, rice, tapioca, corn (maize) and cereals such as rye, oats, wheat. Preferred is starch made from potatoes, com or rice it further includes physically modified starches such as gelatinized or cooked starches, starches with a modified acid value (pH), e.g. where acid has been added to lower their acid value to a range of about 3 to 6. Further included are starches, e.g. potato starch, in which the divalent ions like Ca⁺² or Mg⁺²-ions bridging the phosphate groups have been partially or completely eliminated from this bridging function, i.e. the phosphate bridges have partially or completely been broken down and optionally wherein the eliminated ions have been replaced again partially or wholly by the same or different mono- or polyvalent ions. It further includes pre-extruded starches.

It has recently been found, that starches with a water content within the range of 5 to 40% by weight based on the weight of the composition undergo a "specfic narrow endothermic transition" on heating to elevated temperatures and in a closed volume just prior to its endotherm change characteristic of oxidative and thermal degradation. The specific endothermic transition can be determined by differential scanning calorimetric analysis (DSC) and is indicated on the DSC-diagram by a specific relatively narrow peak just prior to the endotherm characteristic of oxidative and thermal degradation. The peak disappears as soon as the mentioned specific endothermic transition has been undergone. The term "starch" includes also treated starches wherein said specific endothermic transition has been undergone.

Examples of water-insoluble thermoplastic materials are polyolefines, such as polyethylene (PE), polyisobutylenes, polypropylenes, vinylpolymers such as poly(vinyl chloride) (PVC), poly(vinyl acetates), polystyrenes; polyacrylonitriles (PAN); polyvinylcarbazols (PVK); essentially water-insoluble poly(acrylic acid) esters or poly(methacrylic acid) esters; polyacetals (POM); polycondensates such as polyamides (PA), thermoplastic polyesters, polycarbonates, poly (alkylene terephthalates); polyarylethers; thermoplastic polyimides; but also poly(hydroxy butyrate) (PHB) and high molar-mass, essentially water-insoluble poly(alkylene oxides) such as polymers of ethylene oxide and propylene oxide as well as their copolymers are included.

Further included are essentially water-insoluble thermoplastic copolymers of the different kinds known such as ethylene/vinyl acetate-copolymers (EVA); ethylene/vinyl alcohol-copolymers (EVAL); ethylene/acrylic acid-copolymers (EAA); ethylene/ethyl acrylate-copolymers (EEA); ethylene/methyl acrylate-copolymers (EMA); ABS-copolymers; styrene/acrylonitrile-copolymers (SAN); as well as their mixtures.

Preferred from these are those with a set processing temperature preferably within the range of 95°C to 210°C, preferably within the range of 95°C to 190°C.

Preferred from these are further those polymers containing polar groups such as ether-, acid or ester groups. Such polymers include e.g. copolymers of ethylene, propylene or isobutylene such as ethylene/vinyl acetate-copolymers (EVA), ethylene/vinyl alcohol-copolymers, ethylene/acrylic acid-copolymers (EAA),ethylene/ethyl acrylate-copolymers (EEA), ethylene/methacrylate- copolymers (EMA), styrene/acrylonitrile-copolymers (SAN); polyacetals (POM) and their mixtures as mentioned above.

The ratio of the water containing destructurized starch having no granular structure to synthetic polymer can be 0.1:99.9 to 99.9:0.1. It is however preferred that the destructurized starch having no granular structure contributes noticeably to the properties of the final material. Therefore, it is preferred that the destructurized starch having no granular structure is present in an amount of at least 50% and more preferably in the range of 70% to 99.5% by weight of the entire composition, i.e. the synthetic polymer is present in a concentration of less than 50 % and more preferably in a concentration in the range of 30 % to 0.5 % by weight of the entire composition.

A mixture of 0.5 to 15% by weight of the synthetic polymer and 99.5 to 85% of the water containing destructurized starch having no granular structure shows already a significant improvement in the properties of the obtained materials. For certain applications a ratio of the synthetic polymer to the starch/water component of 0.5 5% to 99.5 - 95% is preferred and especially a ratio of 0.5 - 2% to 99.5 - 98% by weight.

The synthetic polymer may contain the usual known additives for processing.

The starch is preferably destructurized and granulated before it is mixed with the synthetic polymer which is preferably granulated to an equal granular size as the destructurized starch. However, it is possible to process native starch or pre-extruded granulated or powdered starch together with powdered or granulated plastic material in any desired mixture or sequence.

The essentially destructurized starch/water composition or granules have a preferred water content in the range of 10 to 20% by weight of the starch/water component, preferably 12 to 19% and especially 14 to 18% by weight of the starch/water component.

The water content herein refers to the weight of starch/water component within the total composition and not to the weight of the total composition which would include also the weight of the essentially water-insoluble synthetic thermoplastic polymer. It is essential that the starch/water component has the indicated water content during melt formation.

As an "essentially water-insoluble synthetic thermoplastic polymer" a polymer is understood which dissolves water at a rate of maximum 5% per 100 grams of the polymer at room temperature and preferably at a rate of maximum 2% per 100 grams of the polymer at room temperature.

In order to destructurize the starch, it is suitably heated in a screw barrel of an extruder for a time long enough to effect destructurization. The temperature is preferably within the range of 105°C to 190°C, preferably within the range of 130°C to 190°C depending on the type of starch used. For this destructurizing, the starch material is heated preferably in a closed volume. A closed volume can be a closed vessel or the volume created by the sealing action of the unmolten feed material as happens in the screw of injection molding or extrusion equipment. In this sense the screw and barrel of an injection molding machine or an extruder is to be understood as being a closed vessel. Pressures created in a closed vessel correspond to the vapour pressure of water at the used temperature but of course pressure may be applied and/or generated as normally occurs in a screw and barrel. The preferred applied and/or generated pressures are in the range of pressures which occur in extrusion and are known per se, i.e. from zero to 150 x 10⁵ N/m² preferably from zero to 75 x 10⁵ N/m² and most particularly from zero to 50 x 10⁵ N/m². The obtained destructurized starch having no granular structure is granulated and ready to be mixed with the synthetic polymer to obtain the granular mixture of the destructurized starch/synthetic polymer starting material to be fed to the screw barrel.

Within the screw, the granular mixture is heated to a temperature which is generally within the range of 80°C to 200°C, preferably within the range of 120°C to 190°C and especially within the range of 130°C to 190°C

The minimum pressures under which the melts are formed correspond to the water vapour pressures produced at said temperatures. The process is carried out in a closed volume as explained above, i.e. in the range of the pressures which occur in extrusion or injection molding processes and known per se, e.g. from zero to 150 x 10⁵ N/m² preferably from zero to 75 x 10⁵ N/m² and most particularly from zero to 50 x 10⁵ N/m².

When forming a shaped article by extrusion the pressures are preferably as mentioned above. If the melt according to this invention is, e.g., injection molded, the normal range of injection pressures used in injection molding is applied, namely from 300 x 10⁵ N/m² to 3.000 x 10⁵ N/m² and preferably from 700 x 10⁵ to 2200 x 10⁶ N/m².

The starch material of the present invention may contain or may be mixed with additives such as extenders, fillers, lubricants, plasticizers and/or colouring agents.

The additives may be added before the destructurizing step or after this step, i.e. mixed with the solid granules of the destructurized starch. It mainly depends on the intended use of the destructurized starch.

Such additives are extenders of different kinds, e.g. gelatin, vegetable proteins such as sunflower protein, soybean proteins, cotton seed proteins, peanut proteins, rape seed proteins, blood proteins, egg proteins, acrylated proteins; water-soluble polysaccharides such as: alkylcelluloses hydroxyalkylcelluloses and hydroxyalkylalkylcelluloses, such as: methylcellulose, hydroxymethylcellulose, hydroxyethylcellulose, hydroxypropylcellulose, hydroxyethylmethylcellulose, hydroxypropylmethylcallulose, hydroxybutylmethylcellulose, cellulose esters and hydroxyalkylcellulose esters such as: cellulose acetylphtalate (CAP), Hydroxypropylmethylcellulose (HPMCP); carboxyalkylcelluloses, carboxyalkyl-alkylcelluloses, carboxyalkylcellulose esters such as: carboxymethylcellulose and their alkali-metal salts; water-soluble synthetic polymers such as: poly(acrylic acids) and their salts and essentially water soluble poly(acrylic acid) esters, poly(methacryllc acids) and their salts and essentially water-soluble poly(methacrylic acid) esters, essentially water soluble poly(vinyl acetates), poly(vinyl alcohols), poly(vinyl acetate phthalates) (PVAP), poly(vinyl pyrrolidone), poly(crotonic acids); suitable are also phthalated gelatin, gelatin succinate, crosslinked gelatin, shellac, water soluble chemical derivatives of starch, cationically modified acrylates and methacrylates possessing, for example, a tertiary or quaternary amino group, such as the diethylaminoethyl group, which may be quatemized if desired; and other similar polymers.

Such extenders may optionally be added in any desired amount preferably up to and including 50 %, preferably within the range of 3% to 10 % based on the total weight of all the components.

Further additives are inorganic fillers, such as the oxides of magnesium, aluminum, silicon, titanium, etc. preferably in a concentration in the range of 0.02 to 3 % by weight preferably 0.02 to 1 % based on the total weight of all the components.

Further examples of additives are plasticizers which include low molecular poly(alkylene oxides), such as poly (ethylene glycols), poly(propylene glycols), poly ethylene-propylene glycols); organic plasticizers of low molar masses, such as glycerol, glycerol monoacetate, diacetate or triacetate; propylene glycol, sorbitol, sodium diethylsulfosuccinate, triethyl citrate, tributyl citrate, etc., added in concentrations ranging from 0.5 to 15 %, preferably ranging from 0.5 to 5 % based on the total weight of all the components.

Examples of colouring agents include known azo dyes, organic or inorganic pigments, or colouring agents of natural origin. Inorganic pigments are preferred, such as the oxides of iron or titanium; these oxides, known per se, being added in concentrations ranging from 0.001 to 10 %, preferably 0.5 to 3 %, based on the total weight of all the components.

The sum of the plasticizer and water contents should preferably not exceed 25 %, and should most preferably not exceed 20 %, based on the total weight of all the components.

There may further be added compounds to improve the flow properties of the starch material such as animal or vegetable fats, preferably in their hydrogenated form, especially those which are solid at room temperature. These fats have preferably a melting point of 50°C or higher. Preferred are triglycerides of C₁₂ -, C₁₄ -, C₁₆ -, and C₁₈ - fatty acids.

These fats can be added alone without adding extenders or plasticizers.

These fats can advantageously be added alone or together with mono- and/or diglycerides or phosphatides, especially lecithin. The mono- and diglycerides are preferably derived from the types of fats described above, i.e. from C₁₂ -, C₁₄ -, C₁₆ -, and C₁₈ - fatty acids.

The total amounts used of the fats, mono-, diglycerides and/or lecithins are up to 5 % and preferably within the range of 0.5 to 2 % by weight of the destructurized starch components.

The materials described herein above form thermoplastic melts on heating and in a closed vessel, i.e. under conditions of controlled water-content and pressure. Such melts can be processed just like conventional thermoplastic materials, using, for example, injection molding, blow molding, extrusion and coextrusion (rod, pipe and film extrusion), compression molding, to produce known articles. The articles include bottles, sheets, films, packaging materials, pipes, rods, laminated films, sacks, bags, pharmaceutical capsules, granules or powders.

Such modified starches may be used as carrier materials for active substances, and may be mixed with active ingredients such as pharmaceuticals and/or agriculturally active compounds such as insecticides or pesticides for subsequent release applications of these ingredients. The resulting extruded materials can be granulated or worked to fine powders.

The following examples further explain the invention.

### Example 1

### (a) Preparation of destructurized starch granulates: having no granular structure.

Natural potato starch, a lubricant/release agent (hydrogenated fat) and a melt flow accelerator (lecithin) and titanium dioxide were mixed together in the relative proportions in a powder mixer for 10 minutes so that a composition consisting of 80.6 parts of natural potato starch, one part of the hydrogenated triglyceride of the fatty acid C₁₈: C₁₆: C₁₄ in a ratio of 65:31:4 weight percent, 0.7 parts lecithin, 0.7 parts of titanium dioxide and 17 parts water in the form of a freely flowing powder is obtained. This material was then fed to the hopper of an extruder. In the screw barrel the powder was melted. The temperature within the barrel was measured to be 175°C, the average total residence time was 12 minutes (approx. 10 minutes heating time, approx. 2 minutes in molten state) and the pressure generated was equal to the vapour pressure of the moisture present in the volume of the extruder barrel. The melt was then extruded, and cut into granulates of an average diameter of 2 to 3 mm. The material was hard, white with a fine foamed structure. The water content was 12%, as water was allowed to escape when the melt left the extruder nozzle.

The obtained granulated material was then conditioned to a water content of 17%.

### (b) Preparation of destructurized starch granules of acid-washed potato starch: having no granular structure.

600 g of native potato starch were suspended in 700 cm³ of 0.2M HCl and stirred for 10 minutes. The suspension was filtered and the starch washed on the filter three times with 200 cm³ portions of 0.2M HCl. The starch was again suspended in 500 cm³ 0.2M HCl, stirred again for 10 minutes, filtered, washed three times with 200 cm³ portions of 0.2M HCI.

After the treatment with HCl, the excess of acid was removed by washing on a filter with demineralized (deionized) water in the following way: the starch was washed twice with 200 cm³ portions of deionized water and then suspended in 500 cm³ of deionized water. This washing procedure with deionized water (to remove excess acid) was repeated twice to get the starch free of HCl. This was controlled by adding silver nitrate to the washing water. When there was no more silver chloride precipitating in the washing water, the washing was completed. The washed starch was pressed on the filter and dried in a conditioning room (25°C, 40% RH) until it equilibrated at about 17.0% H₂O.

Analyses have been carried out before and after the acid washing of starch for mono- and divalent ions and results obtained showed that the Ca⁺²-ions bridging the phosphate groups were essentially removed.

### (c) Injection molding of a mixture of destructurized starch having no granular structure and synthetic polymer.

The granulates as obtained under (a) and the granules as obtained under (b) above were mixed with a synthetic polymer in the weight ratios as specified in table 1 below and injection molded to produce test pieces suitable for measuring their dimensional stability. The test pieces were injection molded using a Kloeckner FM60 injection molding machine at an injection molding temperature at the end of the barrel of 165°C at a cycle time of about 15 seconds. The injection molding pressure was about 1600 bars and the back pressure about 75 bars.

### d) Testing and testing conditions

The test pieces were placed (laid on a screen) in a climatic cabinet in which a high relative humidity (near 100% R.H.) was maintained using a 1% aqueous sulfuric acid solution at room temperature. For each blends material 3 test pieces were used to obtain average figures relating to dimensional stability.

The test pieces obtained from the mold, were cut to a length of about 87-90 mm, which is close to the optimal length which can be measured on a NIKON profile projector V12.

After cutting the length, the samples were initially equilibrated to 14% H₂O content, placed on the NIKON V12 and their widths and lengths were measured.

The samples were then placed in the climatic cabinet and exposed to a high relative humidity at room temperature. Reference samples of unblended starch were placed under same conditions. The dimensions were measured on each of the 3 pieces and recorded after 1, 2 and 3 days.

The lengths measured are given in Table 1.

In width, slight expansions of up to 4% with 1% polymer content and less than 4% with 5% polymer, were generally observed.

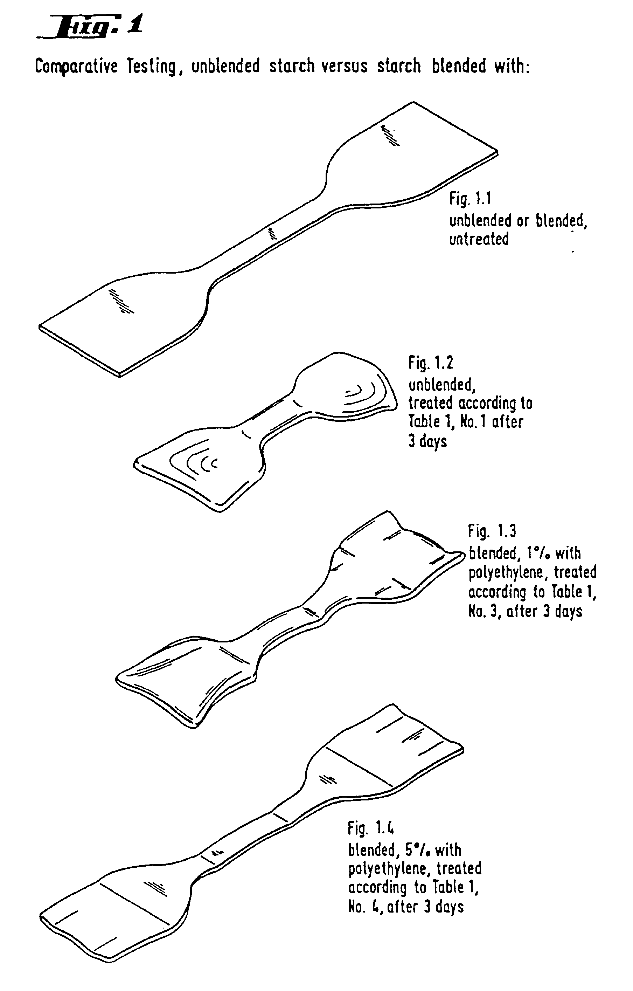

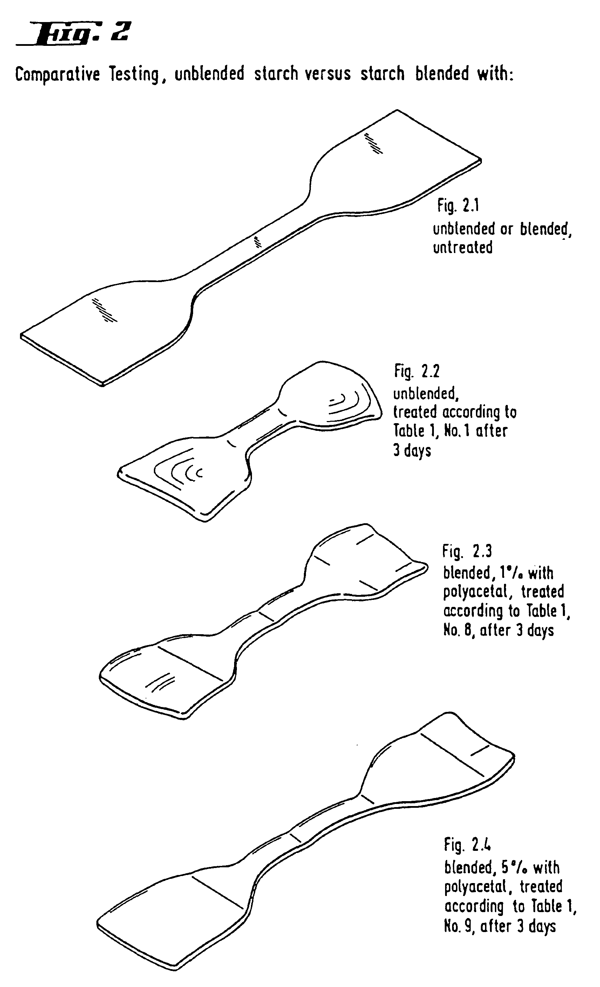

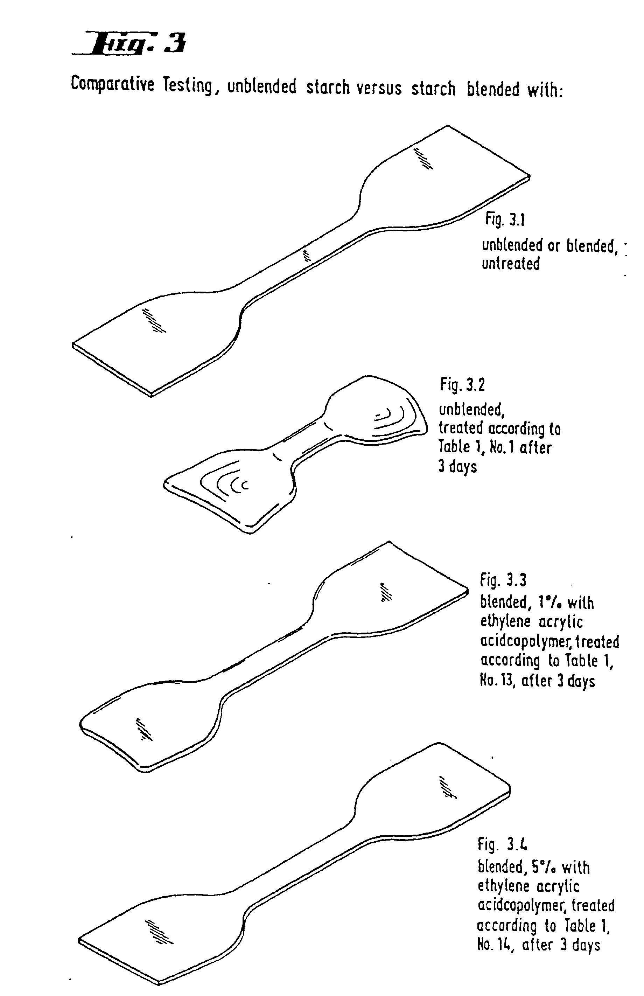

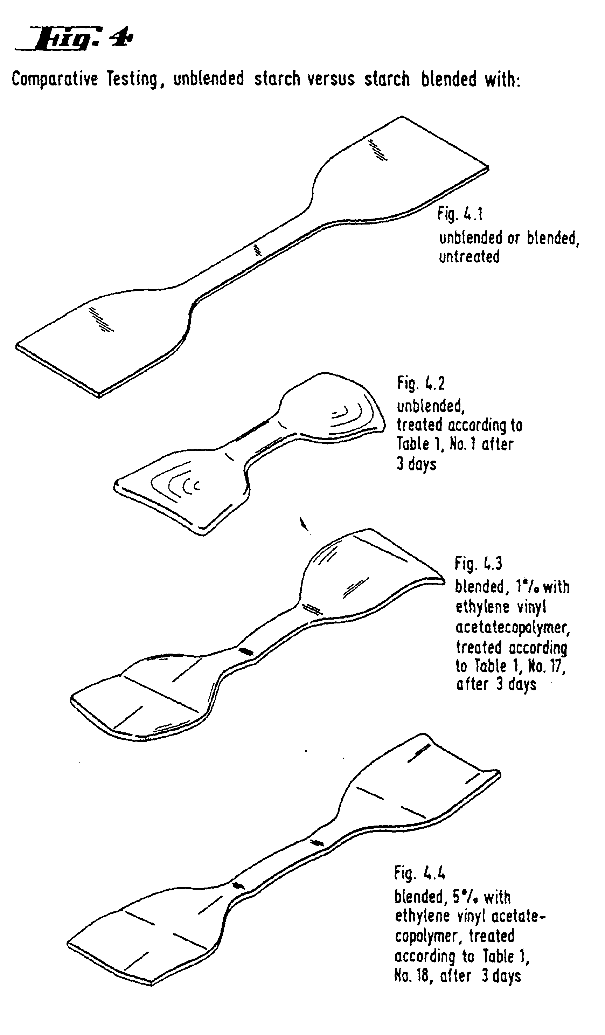

The Figures 1, 2, 3 and 4 illustrate the results obtained according to this Example for storing three days under the indicated conditions.

Figure 1 shows comparative test results for untreated starch, blended starch containing 1% of polyethylene and 5% of polyethylene when stored three days according to Example 1(d).

Figure 2 shows comparative test results for untreated starch, blended starch containing 1% of polyacetal and 5% of polyacetal when stored three days according to Example 1(d).

Figure 3 shows comparative test results for untreated starch, blended starch containing 1% of EAA (ethylene/ acrylic acid-copolymer) and 5% of EAA (ethylene/acrylic acid-copolymer) when stored three days according to Example 1(d).

Figure 4 shows comparative test results for untreated starch, blended starch containing 1% of EVA (ethylene/vinyl acetate-copolymer) and 5% of EVA (ethylene/vinyl acetate-copolymer) when stored three days according to Example 1(d).

**TABLE 1**

| No. polymer added | % by weight of polymer added | dimensional deformation, change in % after, | | |
|---|---|---|---|---|
| | | 1 day | 2 days | 3 days |
| 1. none, comparative example | | -40 | -50.1 | -54 |
| 2. polyethylene | 0.5 | -15 | -20 | -25 |
| 3. " | 1.0 | -13 | -14 | -17 |
| 4. " | 5.0 | + 1.3 | +0.2 | -1.8 |
| 5. polystyrene | 1.0 | +1.05 | - 0.5 | -6.7 |
| 6. " | 5.0 | +0.45 | -0.3 | -0.8 |
| 7. polyacetal | 0.1 | ± 1 | - 4.0 | -10 |
| 8. " | 1.0 | +1.5 | +0.4 | -6.2 |
| 9. " | 5.0 | +0.7 | +0.1 | -0.6 |
| 10. " | 10.0 | ±0.1 | ± 0.1 | ±0.1 |
| 11. " | 20.0 | ±0.1 | ±0.1 | ±0.1 |
| 12. EAA* | 0.5 | -0.2 | -7.0 | -18.0 |
| 13. " | 1.0 | +0.07 | -4.0 | -11.0 |
| 14. " | 5.0 | +0.6 | -1.4 | -5.0 |
| 15. " | 10.0 | +0.1 | -0.1 | -0.4 |
| 16. EVA** | 0.5 | - 0.5 | -5.0 | -17.1 |
| 17. " | 1.0 | +0.3 | -0.5 | -7.0 |
| 18. " | 5.0 | +0.2 | -1.2 | -4.8 |
| 19. " | 20.0 | -0.1 | -0.1 | -2.0 |

| | | | | |
|---|---|---|---|---|
| * EAA = ethylene/acrylic acid-copolymer (9% acrylic acid comonomer) | | | | |
| ** EVA= ethylene/vinyl acetate-copolymer (10% vinyl acetate comonomer) | | | | |

### Example 2

The granulates obtained according to Example 1(a) and the granules obtained according to Example 1(b) where each mixed with polyethylene, polystyrene, polyacetal, ethylene/acrylic/acid-copolymers (9% acrylic acid-comonomer) and ethylene/vinyl acetate-copolymer (10% vinyl acetate-comonomer) each time in ratio of 25%, 50%, 75% and 90% by weight of polymer added. Dimensional changes were nominal after exposure to humid air according to Example 1(d).

## Claims

1. A composition comprising:
a) destructurized starch having no granular stucture produced by heating a starch having a water content of 5 to 30% by weight based on the starch/water component, in a closed volume under shear, and at a temperature above the glass transition and the melting points of its components and at a pressure corresponding at a minimum to the vapor pressure of water at the used temperature to form a melt and heating the melt for a time long enough to obtain a melting of the molecular structure of the starch granules and a homogenization of the melt;
b) a water-insoluble thermoplastic polymer which undergoes melt formation at a set processing temperature within the range of 95°C to 210°C and is selected from the group consisting of polyolefines, poly(vinyl chloride), poly(vinyl acetate), polystyrenes, polyacrylonitriles, polyvinylcarbazols, poly(acrylic acid)esters, poly(methacrylic acid)esters, polyacetals, thermoplastic polycondensates, polyarylethers, thermoplastic polyimides, poly(hydroxy butyrate) and copolymers thereof, wherein the thermoplastic polymer dissolves water at a rate of maximum 5% per 100 g of the polymer at room temperature.

2. A composition according to claim 1 further containing c) one or more materials selected from the group consisting of extenders, fillers, lubricants, plasticizers, flow accelerators, coloring agents, pigments and mixtures thereof.

3. A composition according to the claims 1 or 2, wherein the thermoplastic polymer is selected from the group consisting of polyethylene, polyisobutylenes, polypropylenes, poly(vinyl chloride), poly(vinyl acetates), polystyrenes, polyacrylonitriles, polyamides, thermoplastic polyesters, water-insoluble poly(acrylic acid esters) and water-insoluble poly(methacrylic acid esters), as well as their copolymers and their mixtures.

4. A composition according to claim 3, wherein the thermoplastic polymer is selected from the group consisting of polyethylene, polyisobutylenes and polypropylenes.

5. A composition according to claim 3, wherein the thermoplastic polymer is a poly(vinyl chloride).

6. A composition according to claim 3, wherein the thermoplastic polymer is a poly(vinyl acetate).

7. A composition according to claim 3, wherein the thermoplastic polymer is a polystyrene.

8. A composition according to claim 3, wherein the thermoplastic polymer is a polyacrylonitrile.

9. A composition according to claim 3, wherein the thermoplastic polymer is a polyvinylcarbazol.

10. A composition according to claim 3, wherein the thermoplastic polymer is a polyamide.

11. A composition according to claim 3, wherein the thermoplastic polymer is a thermoplastic polyester.

12. A composition according to claim 3, wherein the thermoplastic polymer is selected from the group consisting of water-insoluble poly(acrylic acid esters) and water-insoluble poly(methacrylic acid esters).

13. A composition according to any one of the claims 1 to 3, wherein the thermoplastic polymer is selected from the group consisting of ethylene/vinyl acetate-copolymers, ethylene/vinyl alcohol-copolymers, ethylene/acrylic acid-copolymers, ethylene/ethyl acrylate-copolymers, ethylene/methyl acrylate-copolymers, ABS-copolymers, styrene/ acrylonitrile-copolymers, polyacetals and their mixtures.

14. A composition according to any one of the claims 1 to 3, wherein the thermoplastic polymer is an ethylene/vinyl acetate-copolymer.

15. A composition according to any one of the claims 1 to 3, wherein the thermoplastic polymer is an ethylene/vinyl alcohol-copolymer.

16. A composition according to any one of the claims 1 to 3, wherein the thermoplastic polymer is an ethylene/acrylic acid-copolymer.

17. A composition according to any one of the claims 1 to 3, wherein the thermoplastic polymer is an ethylene/ethyl acrylate copolymer.

18. A composition according to any one of the claims 1 to 3, wherein the thermoplastic polymer is an ethylene/methyl acrylate-copolymer.

19. A composition according to any one of the claims 1 to 3, wherein the thermoplastic polymer is a ABS-copolymer.

20. A composition according to any one of the claims 1 to 3, wherein the thermoplastic polymer is a styrene/acrylonitrilecopolymer.

21. A composition according to any one of the claims 1 to 3, wherein the thermoplastic polymer is a polyacetal.

22. A composition according to any one of the claims 1 to 21, wherein the starch has been heated to a temperature within the range 105°C to 150°C.

23. A composition according to any one of the claims 1 to 22, wherein the thermoplastic polymer has a set processing temperature within the range of 95°C to 190°C.

24. A composition according to any one of the claims 1 to 23, wherein the ratio of the water-containing destructurized starch to synthetic polymer is 0.1:99.9 to 99.9:0.1.

25. A composition according to any one of the claims 1 to 23, wherein the water-containing destructurized starch is present in a ratio of 25% by weight of the thermoplastic polymer.

26. A composition according to any one of the claims 1 to 23, wherein the water-containing destructurized starch is present in a ratio of 50% by weight of the entire composition.

27. A composition according to any one of the claims 1 to 23, wherein the water-containing destructurized starch is present in a ratio of 75% by weight of the thermoplastic polymer.

28. A composition according to any one of the claims 1 to 23, wherein the water-containing destructurized starch is present in a ratio of 90% by weight of the thermoplastic polymer.

29. A composition according to any one of the claims 1 to 23, wherein the aynthetlc polymer is present in a concentration in the range of 30% to 0.5% by weight of the entire composition.

30. A composition according to any one of the claims 1 to 23, wherein the ratio of the synthetic polymer to the starch/ water component is 0.5 - 5% to 99.5 - 95% by weight.

31. A composition according to any one of the claims 1 to 23, wherein the ratio of the synthetic polymer to the starch/ water component is from 0.5% - 2% to 99.5% - 98% by weight.

32. A composition according to any one of the claims 1 to 31, wherein said starch is selected from chemically essentially non-modified starch being carbohydrates of natural, vegetable origin composed mainly of amylose and/or amylopectin, preferably potatoes, rice, tapioca, corn, rye, oats, wheat; physically modified starch; starch with a modified acid value (pH); starch, in which the divalent ions bridging the phosphate groups have been eliminated from this bridging function and optionally wherein the eliminated ions have been replaced again partially or wholly by the same or different mono- or polyvalent ions, and/or pre-extruded starches.

33. A composition according to any one of the claims 1 to 32, wherein said starch was mixed with the synthetic polymer and heated for destructurization in a closed volume for a time long enough to effect destructurization to a temperature within the range of about 105°C to 200°C.

34. A composition according to any one of the claims 1 to 33, wherein the starch was heated for destructurization to a temperature within the range of 130°C to 190°C.

35. A composition according to any one of the claims 1 to 34, wherein for destructurization pressure was applied in the range of from zero to 150 x 10 N/m².

36. A composition according to any one of the claims 1 to 35, wherein the starch has a water content in the range of 10 to 20% by weight of the starch/water component.

37. A composition according to any one of the claims 1 to 35, wherein the starch has a water content In the range of 12% to 19% by weight, calculated to the weight of the starch/water component.

38. A composition according to any one of the claims 1 to 37, wherein the starch/synthetic polymer mixture contains extenders, fillers, lubricants, plasticizers and/or coloring agents.

39. A composition according to claim 38, **characterized in that** the composition contains an extender or a mixture of extenders within the range of up to 50%, based on the weight of all components.

40. A composition according to claim 38, **characterized in that** the composition contains an extender or a mixture of extenders within the range of 3% to 10%, based on the weight of all components.

41. A composition according to claim 39 or 40, wherein the extender is selected from the group consisting of gelatin, vegetable proteins. water-soluble polysaccharides selected from the group consisting of alkylcelluloses, hydroxyalkylcelluloses, hydroxyalkylalkylcelluloses, cellulose esters and hydroxyalkylcellulose esters, carboxyalkylcelluloses, carboxyalkyl-alkyl-celluloses, carboxyalkylcelluloseesters, water-soluble synthetic polymers selected from the group consisting of poly(acrylic acids) and their salts, poly(methacrylic acids) and their salts, poly(vinyl alcohols), poly(vinyl pyrrolidone), poly(crotonic acids); phthalated gelatin, gelatin succinate, crosslinked gelatin, shellac, water soluble chemical derivatives of starch, cationically modified acrylates and methacrylates possessing a quaternary amino group, which may be quaternized.

42. A composition according to claim 41, wherein the extender is selected from the group consisting of methylcellulose, hydroxymethylcellulose, hydroxyethylcellulose, hydroxypropylcellulose, hydroxyethylmethylcellulose, hydroxypropylmethylcellulose, hydroxybutylmethylcellulose, cellulose acetylphthalate, Hydroxypropylmethylcellulose, carboxyalkylcelluloses, carboxymethylcellulose and their alkali-metal salts; essentially water soluble poly(vinyl acetates), poly(vinyl alcohols).

43. A composition according to claim 42, wherein the extender is a poly(vinyl alcohol).

44. A composition according to any one of the claims 1 to 43, **characterized in that** the composition contains an organic filler or a mixture of such fillers in a concentration of 0.02 to 3%, by weight of all components.

45. A composition according to any one of the claims 1 to 44, wherein the composition contains a plasticizer within the range of 0.5 to 15%, by weight of all components.

46. A composition according to any one of the claims 1 to 45, wherein the composition contains a coloring agent in a concentration of 0.001 to 10%, by weight of all components.

47. A composition according to any one of the claims 1 to 46, wherein the blended starch contains an active ingredient selected from pharmaceuticals and/or agriculturally active compounds.

48. The composition according to any one of the claims 1 to 47 in the form of a melt.

49. The solidified composition obtained by cooling the material obtained according to claim 48.

50. A blended composition in the form of a thermoplastic melt, comprising water-containing destructurized starch having no granular structure and a water-insoluble thermoplastic polymer or a mixture of such polymers, formed by the process comprising:
1) providing a starch composed mainly of amylose and/or amylopectin and having a water content of from 5% to 30% by weight;
2) heating said starch in a closed volume under shear and at a temperature above the glass transition and the melting points of the starch components and at a pressure corresponding at a minimum to the vapor pressure of water at the used temperature to form a melt whereby the pressure corresponds at a minimum to the vapour pressure of water at the temperature used and heating the melt for a time long enough to obtain a melting of the molecular structure of the starch granules and a homogenization of the melt; and
3) admixing to said starch/water component at least one polymer as defined in claim 1 as component b), before, during or after destructurization.

51. The use of modified starch/synthetic polymer mixture composrtions obtained as claimed in anyone of the claims 1 to 47 as carrier material for active ingredients, preferably as carrier materials for pharmaceuticals, and/or agriculturally active substances.

52. The process of shaping a destructurized starch/synthetic polymer mixture composition as obtained according to anyone of the claims 1 to 47, under controlled water content and pressure conditions as a thermoplastic melt wherein said shaping process is at least one member selected from the class consisting of injection molding, blow molding, extrusion and coextrusion, compression molding or vacuum forming.

53. Shaped articles produced from a composition as claimed in any one of the claims 1 to 47.

54. The articles of claim 53, wherein said articles have been shaped as bottles, sheets, films, packaging materials, pipes, rods, laminates, sacks, bags or pharmaceutical capsules, granules or powders.

## Patentansprüche

1. Zusammensetzung, enthaltend
a) destrukturierte Stärke, die keine körnige Struktur hat, hergestellt durch Erhitzen einer Stärke mit einem Wassergehalt von 5 bis 30 Gew.% bezogen auf die Stärke/Wasser-Komponente, in einem geschlossenen Volumen unter Scherung, und bei einer Temperatur oberhalb des Glas-Übergangs und der Schmelzpunkte ihrer Komponenten und bei einem Druck, der zumindest dem Dampfdruck von Wasser bei der verwendeten Temperatur entspricht, unter Bildung einer Schmelze und Erhitzen der Schmelze über eine Dauer, die ausreichend lange ist um ein Schmelzen der molekularen Struktur der Stärkekörner und eine Homogenisierung der Schmelze zu erhalten;
b) ein wasserunlösliches thermoplastisches Polymer, welches eine Schmelze bei einer vorbestimmten Behandlungstemperatur innerhalb des Bereiches von 95°C bis 210°C bildet und ausgewählt ist aus der Gruppe bestehend aus Polyolefinen, Polyvinylchlorid, Polyvinylacetat, Polystyrolen, Polyacrylonitrilen, Polyvinylcarbazolen, Polyacrylsäureestern, Polymethacrylsäureestern, Polyacetalen, thermoplastischen Polykondensaten, Polyarylethern, thermoplastischen Polyimiden, Polyhydroxybutyrat und deren Copolymeren, worin das thermoplastische Polymer Wasser bei Raumtemperatur mit einer Rate von maximal 5 % pro 100 g des Polymers löst.

2. Zusammensetzung nach Anspruch 1, wobei diese im weiteren c) ein oder mehrere Stoffe ausgewählt aus der Gruppe umfassend Streckmittel, Füllstoffe, Gleitmittel, Plastifizierungsmittel, Fliessmittel, Farbstoffe, Pigmente und deren Mischungen enthält.

3. Zusammensetzung nach einem der Ansprüche 1 oder 2, wobei das thermoplastische Polymer ausgewählt ist aus der Gruppe umfassend Polyethylen, Polyisobutylen, Polypropylen, Poly(vinylchlorid), Poly(vinylacetat), Polystyrole, Polyacrylnitrile, Polyamide, thermoplastische Polyester, wasser-unlösliche Poly(acrylsäureester) und wasser-unlösliche Poly(methacrylsäureester), deren Copolymere und deren Mischungen.

4. Zusammensetzung nach Anspruch 3, wobei das thermoplastische Polymer ausgewählt ist aus der Gruppe umfassend Polyethylen, Polyisobutylen und Polypropylen.

5. zusammensetzung nach Anspruch 3, wobei das thermoplastische Polymer ein Poly(vinylchlorid)ist.

6. Zusammensetzung nach Anspruch 3, wobei das thermoplastische Polymer ein Poly(vinylacetat) ist.

7. Zusammensetzung nach Anspruch 3, wobei das thermoplastische Polymer ein Polystyrol ist.

8. Zusammensetzung nach Anspruch 3, wobei das thermoplastische Polymer ein Polyacrylnitril ist.

9. Zusammensetzung nach Anspruch 3, wobei das thermoplastische Polymer ein Poly(vinylcarbazol) ist.

10. Zusammensetzung nach Anspruch 3, wobei das thermoplastische Polymer ein Polyamid ist.

11. Zusammensetzung nach Anspruch 3, wobei das thermoplastische Polymer ein thermoplastisches Polyester ist.

12. Zusammensetzung nach Anspruch 3, wobei das thermoplastische Polymer ausgewählt ist aus der Gruppe umfassend wasser-unlösliche Poly(acrylsäureester) und wasser-unlösliche Poly(methacrylsäureester).

13. Zusammensetzung nach einem der Ansprüche 1 bis 3, wobei das thermoplastische Polymer ausgewählt ist aus der Gruppe umfassend Ethylen/Vinylacetat Copolymere, Ethylen/Vinylalkohol Copolymere, Ethylen/Acrylsäure Copolymere, Ethylen/Ethylacrylat Copolymere, Ethylen/Methacrylat Copolymere, ABS-Copolymere, Styrol/Acrylnitril Copolymere, Polyacetale und deren Mischungen.

14. Zusammensetzung nach einem der Ansprüche 1 bis 3, wobei das thermoplastische Polymer ein Ethylen/Vinylacetat Copolymer ist.

15. Zusammensetzung nach einem der Ansprüche 1 bis 3, wobei das thermoplastische Polymer ein Ethylen/Vinylalkohol Copolymer ist.

16. Zusammensetzung nach einem der Ansprüche 1 bis 3, wobei das thermoplastische Polymer ein Ethylen/Acrylsäure Copolymer ist.

17. Zusammensetzung nach einem der Ansprüche 1 bis 3, wobei das thermoplastische Polymer ein Ethylen/Ethylacrylat Copolymer ist.

18. Zusammensetzung nach einem der Ansprüche 1 bis 3, wobei das thermoplastische Polymer ein Ethylen/Methacrylat Copolymer ist.

19. Zusammensetzung nach einem der Ansprüche 1 bis 3, wobei das thermoplastische Polymer ein ABS-Copolymer ist.

20. Zusammensetzung nach einem der Ansprüche 1 bis 3, wobei das thermoplastische Polymer ein Styrol/Acrylnitril Copolymer ist.

21. Zusammensetzung nach einem der Ansprüche 1 bis 3, wobei das thermoplastische Polymer ein Polyacetal ist.

22. Zusammensetzung nach einem der vorhergehenden Ansprüche 1 bis 21, wobei die Stärke auf eine Temperatur im Bereich von 105°C bis 190°C erwärmt wurde.

23. Zusammensetzung nach einem der Ansprüche 1 bis 22, wobei das thermoplastische Polymer eine eingestellte Verfahrenstemperatur im Bereich von 95°C bis 190°C aufweist.

24. Zusammensetzung nach einem der Ansprüche 1 bis 23, wobei das Verhältnis der wasserenthaltenden destrukturierten Stärke zum synthetischen Polymer zwischen 0.1 : 99.9 und 99.9 : 0.1 liegt.

25. Zusammensetzung nach einem der Ansprüche 1 bis 23, wobei die wasserenthaltende destrukturierte Stärke in einem Gewichtsverhältnis von 25 % des thermoplastischen Polymers anwesend ist.

26. Zusammensetzung nach einem der Ansprüche 1 bis 23, wobei die wasserenthaltende destrukturierte Stärke in einem Gewichtsverhältnis von 50 % der gesamten Zusammensetzung anwesend ist.

27. Zusammensetzung nach einem der Ansprüche 1 bis 23, wobei die wasserenthaltende destrukturierte Stärke in einem Gewichtsverhältnis von 75 % des thermoplastischen Polymers anwesend ist.

28. Zusammensetzung nach einem der Ansprüche 1 bis 23, wobei die wasserenthaltende destrukturierte Stärke in einem Gewichtsverhältnis von 90 % des thermoplastischen Polymers anwesend ist.

29. Die Zusammensetzung nach einem der Ansprüche 1 bis 23, wobei das synthetische Polymer in einer Konzentration im Bereich von 30 % bis 0.5 % des Gewichts der gesamten Zusammensetzung anwesend ist.

30. Zusammensetzung nach einem der Ansprüche 1 bis 23, wobei das Verhältnis des synthetischen Polymer zum Stärke/Wasser-Bestandteil zwischen 0.5 - 5 Gewichts-% und 99.5 - 95 Gewichts-% liegt.

31. Zusammensetzung nach einem der Ansprüche 1 bis 23, wobei das Verhältnis des synthetischen Polymer zum Stärke/Wasser-Bestandteil zwischen 0.5 - 2 Gewichts-% und 99.5 - 98 Gewichts-% liegt.

32. Zusammensetzung nach einem der Ansprüche 1 bis 31, wobei die besagte Stärke ausgewählt ist von chemisch im wesentlichen nichtmodifizierte Stärken wie zum Beispiel Kohlenhydrate natürlichen, pflanzlichen Ursprungs, hauptsächlich aus Amylose und/oder Amylopektin bestehend, vorzugsweise Kartoffeln, Reis, Tapioka, Mais, Roggen, Hafer und Weizen; physisch modifizierte Stärken; Stärke mit einem modifizierten Säurewert (pH) ; Stärke, in welcher die zweiwertigen Ionen, welche die Phosphatgruppen überbrücken, von ihrer Verbindungsfunktion eliminiert worden sind und gegebenenfalls, worin die eliminierten Ionen wieder teilweise oder vollständig durch gleiche oder verschiedene ein- oder mehrwertige Ionen ersetzt worden sind, und/oder vorextrudierte Stärken.

33. Zusammensetzung nach einem der Ansprüche 1 bis 32, wobei die besagte Stärke mit dem synthetischen Polymer gemischt und zur Destrukturierung in einem geschlossenen Volumen genügend lang erwärmt wird, um eine Destrukturierung bei einer Temperatur im Bereich von 105°C bis 200°C zu erreichen.

34. Zusammensetzung nach einem der Ansprüche 1 bis 33, wobei die Stärke zur Destrukturierung auf eine Temperatur im Bereich von 130°C bis 190°C erwärmt wurde.

35. Zusammensetzung nach einem der Ansprüche 1 bis 34, wobei zur Destrukturierung ein Druck im Bereich von 0 bis 150 x 10⁵ N/m² ausgeübt wurde.

36. Zusammensetzung nach einem der Ansprüche 1 bis 35, wobei die Stärke einen Wassergehalt zwischen 10 % und 20 %, bezogen auf das Gewicht des Stärke/Wasser-Bestandteils, aufweist.

37. Zusammensetzung nach einem der Ansprüche 1 bis 35, wobei die Stärke einen Wassergehalt zwischen 12 und 19 Gewichts-%, berechnet bezogen auf das Gewicht des Stärke/Wasser-Bestandteils, aufweist.

38. Zusammensetzung nach einem der Ansprüche 1 bis 37, wobei die Stärke/synthetisches Polymer-Mischung Dehnungsmittel, Füllstoffe, Gleitmittel, Plastifizierungsmittel und/oder Farbstoffe enthält.

39. Zusammensetzung nach Anspruch 38, wobei die Zusammensetzung Dehnungsmittel oder eine Mischung von Dehnungsmittel im Bereich von bis zu 50 %, bezogen auf das Gesamtgewicht aller Bestandteile, enthält.

40. Zusammensetzung nach Anspruch 38, wobei die Zusammensetzung Dehnungsmittel oder eine Mischung von Dehnungsmittel im Bereich von 3 % und 10 %, bezogen auf das Gesamtgewicht aller Bestandteile, enthält.

41. Zusammensetzung nach Anspruch 39 oder 40, wobei das Streckmittel ausgewählt ist aus der Gruppe umfassend Gelatine, pflanzliche Proteine, wasserlösliche Polysaccharide ausgewählt von der Gruppe umfassend Alkylcellulosen, Hydroxyalkylcellulosen, Hydroxyalkylalkylcellulosen, Celluloseester und Hydroxyalkylcelluloseester, Carboxyalkylcellulosen, Carboxyalkylalkylcellulosen, Carboxyalkylcelluloseester, wasserlösliche synthetische Polymere, ausgewählt von der Gruppe umfassend Poly(acrylsäuren) und deren Salze, Poly(methacrylsäuren) und deren Salze, Polyvinylalkohole, Polyvinylpyrrolidon, Poly(crotonsäure), phthalierte Gelatine, Gelatinesuccinat, vernetzte Gelatine, Schellack, wasserlösliche chemische Derivate von Stärke, kationisch modifizierte Acrylate und Methacrylate mit einer quaternären Aminogruppe, die gewünschtenfalls quaternisiert werden kann.

42. Zusammensetzung nach Anspruch 41, wobei das Streckmittel ausgewählt ist aus der Gruppe umfassend Methylcellulose, Hydroxymethylcellulose, Hydroxyethylcellulose, Hydroxypropylcellulose, Hydroxyethylmethylcellulose, Hydroxypropylmethylcellulose, Hydroxybutylmethylcellulose, Celluloseacetylphthalat, Hydroxypropylmethylcellulose, Carboxyalkylcellulosen, Carboxymethylcellulose und ihre Alkalimetallsalze, im wesentlichen wasserlösliche Poly(vinylacetate), Poly(vinylalkohole).

43. Zusammensetzung nach Anspruch 42, wobei das Streckmittel ein Poly(vinylalkohol) ist.

44. Zusammensetzung nach einem der Ansprüche 1 bis 43, wobei die Zusammensetzung einen organischen Füllstoff oder eine Mischung solcher Füllstoffe in einer Konzentration zwischen 0.02 und 3 %, bezogen auf das Gesamtgewicht aller Bestandteile, enthält.

45. Zusammensetzung nach einem der Ansprüche 1 bis 44, wobei die Zusammensetzung ein Plastifizierungsmittel im Bereich von 0.5 und 15 %, bezogen auf das Gesamtgewicht aller Bestandteile, enthält.

46. Zusammensetzung nach einem der Ansprüche 1 bis 45, wobei die Zusammensetzung einen Farbstoff in einer Konzentration zwischen 0.001 und 10 %, bezogen auf das Gesamtgewicht aller Bestandteile, enthält.

47. Zusammensetzung nach einem der vorhergehenden Ansprüche 1 bis 46, wobei die gemischte Stärke ein aktives Bestandteil enthält, ausgewählt von pharmazeutischen und/oder landwirtschaftlichen aktiven Verbindungen.

48. Zusammensetzung nach einem der Ansprüche 1 bis 47 in Form einer Schmelze.

49. Die fest gewordene Zusammensetzung erhalten durch das Abkühlen des Materials, welches gemäß Anspruch 48 erhalten wurde.

50. Eine Zusammensetzung in Form einer thermoplastischen Schmelze, umfassend wasser-enthaltende destrukturierte Stärke, die keine körnige Struktur hat, und ein wasser-unlösliches thermoplastisches Polymer oder eine Mischung solcher Polymere, geformt durch das Verfahren umfassend:
1) Vorlegen einer Stärke, hauptsächlich bestehend aus Amylose und/oder Amylopektin und eines Wassergehalts von 5 bis 30 Gewichts-%;
2) Erwärmen der besagten Stärke in einem geschlossenen Volumen unter Scherung und bei einer Temperatur oberhalb der Glasübergangs- und der Schmelzpunktstemperaturen der Stärke-Bestandteile und bei einem Druck, der mindestens dem Wasserdampfdruck bei den verwendeten Temperaturen entspricht, um eine Schmelze zu bilden, und genügend langes Erwärmen der Schmelze, um eine Schmelzung der Molekularstruktur der Stärkegranulate und eine Homogenisierung der Schmelze zu erhalten; und
3) Zumischen von mindestens einem Polymer gemäß Anspruch 1 als Bestandteil b) zum besagten Stärke/Wasser-Bestandteil vor, während oder nach der Destrukturierung.

51. Verwendung von Zusammensetzungen bestehend aus einer modifizierten Stärke/synthetisches Polymer-Mischung, erhalten wie beansprucht in einem der vorhergehenden Ansprüche 1 bis 47, als Trägermaterialen für aktive Substanzen, vorzugsweise als Trägermaterialien für pharmazeutische und/oder landwirtschaftlich aktive Verbindungen.

52. Formgebungsverfahren der Zusammensetzung, bestehend aus einer destrukturierten Stärke/synthetisches Polymer-Mischung, wie erhalten gemäß einem der vorhergehenden Ansprüche 1 bis 47, unter kontrollierten Wassergehalt- und Druckbedingungen als eine thermoplastische Schmelze, wobei das besagte Formgebungsverfahren mindestens ein Verfahren ist aus der Gruppe umfassend Spritzgiessen, Blasformen, Extrudieren und Coextrudieren, Pressformen oder Vaccumformen.

53. Geformte Gegenstände hergestellt aus einer Zusammensetzung, wie beansprucht in den vorhergehenden Ansprüchen 1 bis 47.

54. Gegenstände nach Anspruch 53, wobei die besagten Gegenstände geformt wurden zu Flaschen, Folien, Filme, Verpackungsmaterialien, Rohre, Stäbe, Laminate, Säcke, Beutel oder pharmazeutische Kapseln, Granulate oder Puder.

## Revendications

1. Une composition comprenant :
a) de l'amidon déstructuré, ne présentant pas une structure granulaire, produit par le chauffage d'un amidon ayant une teneur en eau de 5 à 30% en poids, par rapport au constituant amidon/eau, dans un volume clos sous action de cisaillement, et à une température au-dessus des points de transition vitreuse et de fusion de ses constituants et à une pression qui correspond au minimum à la tension de vapeur de l'eau à la température employée pour former une masse fondue, et le chauffage de la masse fondue pendant un temps assez long pour obtenir une fusion de la structure moléculaire des granules d'amidon et une homogénéisation de la masse fondue;
b) un polymère thermoplastique insoluble dans l'eau, qui subit une formation d'une masse fondue à une température de traitement déterminée comprise entre 95°C et 210°C, et est choisi dans le groupe comprenant polyoléfines, poly(chlorure de vinyle), poly(acétate de vinyle), polystyrènes, polyacrylonitriles, polyvinylcarbazoles, esters d'acide polyacrylique, esters d'acide polyméthacrylique, polyacétals, polycondensats thermoplastiques, polyaryléthers, polyimides thermoplastiques, poly(hydroxy butyrate) et leurs copolymères, dans lequel le polymère thermoplastique absorbe l'eau en quantité de maximum 5% pour 100 g de polymère à la température ambiante.

2. La composition selon la revendication 1, contenant de plus c) une ou plusieurs matières choisies dans le groupe comprenant des agents de dilution, des charges minérales, des lubrifiants, des plastifiants, des accélérateurs de coulée, des colorants, des pigments et leurs mélanges.

3. La composition selon la revendication 1 ou 2, **caractérisée en ce que** le polymère thermoplastique est choisi dans le groupe comprenant polyéthylènes, polyisobutylènes, polypropylènes, poly(chlorures de vinyle), poly(acétate de vinyles), polystyrènes, polyacrylonitriles, polyamides, polyesters thermoplastiques, poly(esters d'acide acrylique) insolubles dans l'eau et poly(esters d'acide méthacrylique) insolubles dans l'eau, ainsi que leurs copolymères et leurs mélanges.

4. La composition selon la revendication 3, **caractérisée en ce que** le polymère thermoplastique est choisi dans le groupe comprenant polyéthylène, polyisobutylènes et polypropylènes.

5. La composition selon la revendication 3, **caractérisée en ce que** le polymère thermoplastique est un poly(chlorure de vinyle).

6. La composition selon la revendication 3, **caractérisée en ce que** le polymère thermoplastique est un poly(acétate de vinyle).

7. La composition selon la revendication 3, **caractérisée en ce que** le polymère thermoplastique est un polystyrène.

8. La composition selon la revendication 3, **caractérisée en ce que** le polymère thermoplastique est un polyacrylonitrile.

9. La composition selon la revendication 3, **caractérisée en ce que** le polymère thermoplastique est un polyvinylcarbazole.

10. La composition selon la revendication 3, **caractérisée en ce que** le polymère thermoplastique est un polyamide.

11. La composition selon la revendication 3, **caractérisée en ce que** le polymère thermoplastique est un polyester thermoplastique.

12. La composition selon la revendication 3, **caractérisée en ce que** le polymère thermoplastique est choisi dans le groupe comprenant des poly(esters d'acide acrylique) insolubles dans l'eau et des poly(esters d'acide méthacrylique) insolubles dans l'eau.

13. La composition selon l'une quelconque des revendications 1 à 3, **caractérisée en ce que** le polymère thermoplastique est choisi dans le groupe comprenant des copolymères éthylène/-acétate de vinyle, des copolymères éthylène/alcool de vinyle, des copolymères éthylène/acide acrylique, des copolymères éthylène/acrylate d'éthyle, des copolymères éthylène/acrylate de méthyle, des copolymères ABS, des copolymères styrène/acrylonitrile, polyacétals et leurs mélanges.

14. La composition selon l'une quelconque des revendications 1 à 3, **caractérisée en ce que** le polymère thermoplastique est un copolymère éthylène/acétate de vinyle.

15. La composition selon l'une quelconque des revendications 1 à 3, **caractérisée en ce que** le polymère thermoplastique est un copolymère éthylène/alcool de vinyle.

16. La composition selon l'une quelconque des revendications 1 à 3, **caractérisée en ce que** le polymère thermoplastique est un copolymère éthylène/acide acrylique.

17. La composition selon l'une quelconque des revendications 1 à 3, **caractérisée en ce que** le polymère thermoplastique est un copolymère éthylène/acrylate d'éthyle.

18. La composition selon l'une quelconque des revendications 1 à 3, **caractérisée en ce que** le polymère thermoplastique est un copolymère éthylène/acrylate de méthyle.

19. La composition selon l'une quelconque des revendications 1 à 3, **caractérisée en ce que** le polymère thermoplastique est un copolymère ABS.

20. La composition selon l'une quelconque des revendications 1 à 3, **caractérisée en ce que** le polymère thermoplastique est un copolymère styrène/acrylonitrile.

21. La composition selon l'une quelconque des revendications 1 à 3, **caractérisée en ce que** le polymère thermoplastique est un polyacétal.

22. La composition selon l'une quelconque des revendications 1 à 21, **caractérisée en ce que** l'amidon a été chauffé à une température comprise entre 105°C et 190°C.

23. La composition selon l'une quelconque des revendications 1 à 22, **caractérisée en ce que** le polymère thermoplastique a une température de traitement déterminée comprise entre 95°C et 190°C.

24. La composition selon l'une quelconque des revendications 1 à 23, **caractérisée en ce que** la proportion de l'amidon déstructuré contenant de l'eau par rapport au polymère synthétique est de 0,1 :99,9 à 99,9:0,1.

25. La composition selon l'une quelconque des revendications 1 à 23, **caractérisée en ce que** l'amidon déstructuré contenant de l'eau est présent dans une proportion de 25% par rapport au poids du polymère thermoplastique.

26. La composition selon l'une quelconque des revendications 1 à 23, **caractérisée en ce que** l'amidon déstructuré contenant de l'eau est présent dans une proportion de 50% par rapport au poids du polymère thermoplastique.

27. La composition selon l'une quelconque des revendications 1 à 23, **caractérisée en ce que** l'amidon déstructuré contenant de l'eau est présent dans une proportion de 75% par rapport au poids du polymère thermoplastique.

28. La composition selon l'une quelconque des revendications 1 à 23, **caractérisée en ce que** l'amidon déstructuré contenant de l'eau est présent dans une proportion de 90% par rapport au poids du polymère thermoplastique.

29. La composition selon l'une quelconque des revendications 1 à 23, **caractérisée en ce que** le polymère synthétique est présent en une concentration comprise entre 30% et 0,5%, par rapport au poids total de la composition.

30. La composition selon l'une quelconque des revendications 1 à 23, **caractérisée en ce que** la proportion du polymère synthétique par rapport au constituant amidon/eau est de 0,5-5% à 99,5-95% en poids.

31. La composition selon l'une quelconque des revendications 1 à 23, **caractérisée en ce que** la proportion du polymère synthétique par rapport au constituant amidon/eau est de 0,5-2% à 99,5-98% en poids.

32. La composition selon l'une quelconque des revendications 1 à 31, **caractérisée en ce que** le dit amidon est choisi parmi un amidon essentiellement non-modifié chimiquement, qui est un hydrate de carbone d'origine naturelle, végétale, formé essentiellement d'amylose et/ou d'amylopectine, de préférence de pommes de terre, de riz, de tapioca, de maïs, de seigle, d'avoine, de froment; un amidon physiquement modifié; un amidon avec une indice d'acidité (pH) modifié; un amidon dans lequel les ions bivalents reliant les groupes phosphates ont été éliminés de leur fonction de liaison et facultativement dans lequel les ions éliminés ont été remplacés à nouveau, partiellement ou entièrement, par des ions mono- ou polyvalents identiques ou différents, et/ou des amidons pré-extrudés.

33. La composition selon l'une quelconque des revendications 1 à 32, **caractérisée en ce que** le dit amidon a été mélangé avec le polymère synthétique et chauffé pour la déstructuration, dans un volume clos pendant un temps assez long pour obtenir la déstructuration à une température comprise entre environ 105°C et 200°C.

34. La composition selon l'une quelconque des revendications 1 à 33, **caractérisée en ce que** le dit amidon a été chauffé pour la déstructuration à une température comprise de l'intervalle de 130°C à 190°C.

35. La composition selon l'une quelconque des revendications 1 à 34 **caractérisée en ce que**, pour la déstructuration, une pression comprise entre 0 et 150 x 10⁵ N/m² est appliquée.

36. La composition selon l'une quelconque des revendications 1 à 35, **caractérisée en ce que** l'amidon a une teneur en eau comprise entre 10 et 20%, par rapport au poids du constituant amidon/eau.

37. La composition selon l'une quelconque des revendications 1 à 35, **caractérisée en ce que** l'amidon a une teneur en eau comprise entre 12 et 19% en poids, calculée par rapport au poids du constituant amidon/eau.

38. La composition selon l'une quelconque des revendications 1 à 37, **caractérisée en ce que** le mélange amidon/polymère synthétique contient des agents de dilution, des charges minérales, des lubrifiants, des plastifiants et/ou des colorants.

39. La composition selon la revendication 38, **caractérisée en ce que** la composition contient un agent de dilution ou un mélange d'agents de dilution allant jusqu'à 50%, par rapport au poids total des constituants.

40. La composition selon la revendication 38, **caractérisée en ce que** la composition contient un agent de dilution ou un mélange d'agents de dilution comprise entre 3% et 10%, par rapport au poids total des constituants.

41. La composition selon la revendication 39 ou 40, **caractérisée en ce que** l'agent de dilution est choisi dans le groupe comprenant la gélatine, les protéines végétales, des polysaccharides hydrosolubles choisis dans le groupe comprenant des alkylcelluloses, des hydroxyalkylcelluloses et des hydroxyalkylalkylcelluloses, des esters de cellulose et des esters d' hydroxyalkylcellulose, des carboxyalkylcelluloses, des carboxyalkylalkylcelluloses, des esters de carboxyalkylcellulose, des polymères synthétiques hydrosolubles choisis dans le groupe comprenant des acides polyacryliques et leurs sels, des acides polyméthacryliques et leurs sels, des poly(alcools de vinyle), des polyvinylpyrrolidones, des acides polycrotoniques; gélatine phtalatée, succinate de gélatine, gélatine réticulée, shellac, des dérivés chimiques d'amidon hydrosolubles, des acrylates et des acrylate de méthyles modifiés par voie cationique possédant un groupe amino quaternaire, qui peut être quaternisé.

42. La composition selon la revendication 41,
**caractérisée en ce que** l'agent de dilution est choisi dans le groupe comprenant méthylcellulose, hydroxyméthylcellulose, hydroxyéthylcellulose, hydroxypropylcellulose, hydroxyéthylméthylcellulose, hydroxypropylméthylcellulose, hydroxybutylméthylcellulose, acétylphtalate de cellulose, carboxyalkylcellulose, carboxyméthylcellulose et leurs sels de métaux alcalins ; poly(acétates de vinyle) essentiellement hydrosolubles, poly(alcools de vinyle).

43. La composition selon la revendication 42, **caractérisée en ce que** l'agent de dilution est un poly(alcool de vinyle).

44. La composition selon l'une quelconque des revendications 1 à 43, **caractérisée en ce que** la composition contient une charge organique ou un mélange de telles charges en une concentration comprise entre 0,02% et 3%, par rapport au poids total de tous les constituants.

45. La composition selon l'une quelconque des revendications 1 à 44, **caractérisée en ce que** la composition contient un plastifiant compris entre 0,5 et 15%, par rapport au poids de tous les constituants.

46. La composition selon l'une quelconque des revendications 1 à 45, **caractérisée en ce que** la composition contient un colorant à une concentration de 0,001 à 10%, par rapport au poids de tous les constituants.

47. La composition selon l'une quelconque des revendications 1 à 46, **caractérisée en ce que** l'amidon mélangé contient un ingrédient actif choisi parmi des composés actifs pharmaceutiques ou agricoles.

48. La composition selon l'une quelconque des revendications 1 à 47 sous forme de masse fondue.

49. La composition solidifiée obtenue par le refroidissement de la matière obtenue selon la revendication 48.

50. Une composition mélangée sous forme de masse fondue thermoplastique comprenant de l'amidon déstructuré, ne présentant pas une structure granulaire, contenant de l'eau, et un polymère thermoplastique insoluble dans l'eau, ou un mélange de tels polymères, formée par le procédé comprenant :
1) fourniture d'un amidon, essentiellement formé d'amylose et/ou d'amylopectine et ayant une teneur en eau comprise entre 5% et 30% en poids;
2) chauffage du dit amidon dans un volume clos sous une action de cisaillement et à une température au-dessus des points de transition vitreuse et de fusion des composants d'amidon et à une pression qui correspond au minimum à la tension de vapeur de l'eau à la température employée, pour former une masse fondue, et chauffage de la masse fondue pendant un temps assez long pour obtenir une fusion de la structure moléculaire des granules d'amidon et une homogénéisation de la masse fondue, et
3) ajout au dit constituant amidon/eau d'au moins un polymère comme défini dans la revendication 1 comme constituant b), avant, pendant, ou après la déstructuration.

51. L'utilisation de compositions de mélange amidon modifié/polymère synthétique, obtenues comme revendiqué selon l'une quelconque des revendications 1 à 47, en tant que matériau de support pour des ingrédients actifs, de préférence en tant que matériau de support pour des substances actives pharmaceutiques et/ou agricoles.

52. Le procédé de façonnage d'une composition de mélange amidon modifié/polymère synthétique telle qu'obtenue selon l'une quelconque des revendications 1 à 47, sous des conditions de teneur en eau et de pression contrôlées, en une masse fondue thermoplastique, **caractérisé en ce que** le procédé de façonnage est au moins un procédé choisi dans le groupe comprenant moulage par injection, moulage par soufflage, extrusion et coextrusion, moulage par compression ou formage sous vide.

53. Des articles façonnés produits à partir de la composition comme revendiquée selon l'une quelconque des revendications 1 à 47.

54. Les articles selon la revendication 53, **caractérisés en ce que** les dits articles ont été façonnés sous forme de bouteilles, de feuilles, de films, de matériaux d'emballage, de tubes, de tiges, de laminés, de sacs, de sachets ou de granules, de poudres ou de capsules pharmaceutiques.
